# EUROPEAN PATENT SPECIFICATION

(11) **EP 4 429 899 B1**
(45) Date of publication and mention of the grant of the patent: **01.10.2025**
(21) Application number: 22769387.6
(22) Date of filing: 25.08.2022
(51) Int. Cl.: B60B 15/28, B62D 49/06

(54) **A WHEEL WEIGHT HANDLING DEVICE AND A METHOD OF USING THE WHEEL WEIGHT HANDLING DEVICE**
RADGEWICHTHANDHABUNGSVORRICHTUNG UND VERFAHREN ZUR VERWENDUNG DER RADGEWICHTHANDHABUNGSVORRICHTUNG
DISPOSITIF DE MANIPULATION DE MASSE D'ÉQUILIBRAGE ET PROCÉDÉ D'UTILISATION DU DISPOSITIF DE MANIPULATION DE MASSE D'ÉQUILIBRAGE

(30) Priority: 10.11.2021 GB 202116177
(43) Date of publication of application: 18.09.2024
(73) Proprietor: AGCO International GmbH, 8212 Neuhausen am Rheinfall (CH)
(72) Inventor: SCHULLER, Robert, 87616 Marktoberdorf (DE)
(74) Representative: AGCO Intellectual Property Department
(86) International application number: PCT/IB2022/057972
(87) International publication number: WO 2023/084326

(56) References cited:
- EP-A1- 3 266 622
- EP-A1- 3 819 133
- US-A1- 2018 281 512
- US-A1- 2018 345 721
- US-A1- 2019 092 092
- US-A1- 2021 214 026

## Description

### FIELD OF THE INVENTION

This invention relates to a wheel weight handling device for assisting a user in mounting a wheel weight to and/or removing a wheel weight from the wheel of an agricultural vehicle, and to a method of using the wheel weight handling device.

### BACKGROUND OF THE INVENTION

Wheel weights can be used as ballast for agricultural vehicles, such as tractors. It may be desirable to increase ballast in order to control traction. Alternatively, ballast may be added to provide a counterweight when one end of the vehicle is loaded with heavy equipment. Some wheel weights are mounted around the wheel's hub. Typically, these wheel weights comprise a body with a central passage extending through it.

US2018/281512 A1, US2019/092092 A1 and US2018/345721 A1 each discloses a wheel weight arrangement for an agricultural tractor.

Wheel weights are typically very heavy (e.g. over 100 kg). It is important to be able to move wheel weights as safely as possible, in a time-efficient way. Mounting the wheel weight to the wheel typically requires the use of heavy-lifting machinery, such as a loading fork (e.g. a forklift) or a crane, which can be operated to lift the wheel weight and place it on the wheel of the vehicle. Even so, mounting the wheel weight to the wheel can be challenging, and time consuming. Accordingly, there is a need to facilitate convenient and safe mounting of a wheel weight to an agricultural vehicle.

### SUMMARY OF THE INVENTION

Aspects of invention are defined by the claims.

According to examples in accordance with an aspect of the invention, there is provided a wheel weight handling device for use in mounting a wheel weight to a wheel of an agricultural vehicle, the wheel weight comprising a passage extending axially through it from an outer side of the wheel weight to an inner side of the wheel weight, the wheel weight handling device comprising:
a frame at least part of which is receivable in the passage of the wheel weight, the frame comprising at least one load bearing roller for engaging an inner surface of the passage, the at least one load bearing roller being rotatable about a rotation axis; and
a retaining arrangement for limiting movement of the wheel weight relative to the wheel weight handling device in use, the retaining arrangement comprising at least one inner retaining member mounted to the frame for movement between a retracted, mounting positon and an extended, retaining position for location behind an inner side surface of the wheel weight when supported on the at least one load bearing roller;
the retaining arrangement having an actuator mechanism for moving the at least one inner retaining member between the mounting and retaining positions.

When inserting the wheel weight handling device into the passage, the inner retaining member is in the mounting position. The wheel weight handling device can be mounted to the wheel weight by bringing the load bearing roller into contact with the wall of the passage, then moving the inner retaining member to its retaining position where it is positioned behind an inner side surface of the wheel weight. In this position, the inner retaining member can engage an inner side surface of the wheel weight to limit movement of the wheel weight handling device in a direction from the inner side of the wheel weight to the outer side of the wheel weight. Looked at another way, when the inner retaining member is in the retaining position it prevents the wheel weight from sliding off the inner end of the at least one load bearing roller. When the wheel weight handling device is mounted to the wheel weight, the rotation axis of the load bearing roller is parallel to the axis of the passage.

Moving the retaining member from its mounting position to its retaining position may increase the amount by which the at least one retaining member projects outwardly from the at least one load bearing roller. When the retaining member is in its mounting position it may or may not project outwardly of the load bearing roller. That is, in some embodiments the retaining member does not project outwardly of the at least one load bearing roller when it is in its mounting position.

The frame may comprise a first load bearing roller and a second load bearing roller, wherein the first load bearing roller is arranged in parallel with the second load bearing roller.

The first load bearing roller and the second load bearing roller may be arranged to support the wheel weight when the wheel weight handling device is mounted to the wheel weight. By providing the two load bearing rollers, the pressure of the wheel weight can be fully supported by the rollers. Accordingly, additional support structures may not be required, which can help to reduce production costs.

The retaining arrangement may further comprise a biasing member arranged to urge the at least one inner retaining member to the mounting position.

In other words, the retaining arrangement may be configured such that the at least one inner retaining member is resiliently biased to the mounting position.

The frame may comprise an inner frame member and an outer frame member, and the at least one load bearing roller may be mounted between the inner and outer frame members, at least the inner frame member and the at least one load bearing roller may be receivable in the passage of the wheel weight, and the at least one inner retaining member may be movably mounted to the inner frame member.

The inner frame member and the outer frame member may have the shape of a semi-circular portion of an annulus. When the wheel weight handling device comprises a first load bearing roller and second load bearing roller, both the first load bearing roller and the second load bearing roller may be mounted between the inner frame member and the outer frame member. Additionally, in embodiments including two load bearing rollers, both the first load bearing roller and the second load bearing roller may be receivable in the passage of the wheel weight. Moving the retaining member from its mounting position to its retaining position may increase the amount by which the retaining member projects outwardly from the frame.

The frame may further comprise a plurality of support members extending between the inner and outer frame members along respective longitudinal axes.

The retaining arrangement may further comprise at least one outer retaining member for locaction in front of an outer side surface of the wheel weight, the at least one outer retaining member being mounted or mountable to the frame so as to be spaced apart from the at least one inner retaining member in a direction along the rotation axis.

When the frame comprises support members extending between the inner and outer frame members along respective longitudinal axes, the outer retaining member is arranged to oppose the at least one inner retaining member along the longitudinal axes to prevent movement of the wheel weight in either direction.

The at least one outer retaining member may be adjustably mounted or mountable to the frame to enable the axial spacing between the at least one outer retaining member and the at least one inner retaining member to be adjusted.

Accordingly, the distance between the inner and outer retaining members may be adjusted which can help to facilitate secure attachment of the wheel weight handling device to the wheel weight. In particular, by adjusting the distance between the inner and outer retaining members it may be possible to reduce the risk of axial movement of the wheel weight. Accordingly, the wheel weight handling device can facilitate secure and convenient mounting of the wheel weight to a wheel.

The at least one outer retaining member may be removably mounted or mountable to the frame.

Providing an outer retaining member that is removably mountable to the frame can facilitate mounting of the device to a wheel weight as the outer retaining member can be removed when mounting the device to improve visibility. In some embodiments, the outer retaining member may be mounted to the frame.

When the frame comprises support members extending between the inner and outer frame members along respective longitudinal axes, the at least one outer retaining member may be mounted to two or more of the support members.

The actuator mechanism may comprise: a driving member having a mounting position and a retaining position, wherein the driving member is movable between its mounting position and its retaining position, the driving member may be operatively coupled to the at least one inner retaining member such that the at least one inner retaining member is moved from its mounting position to its retaining position when the driving member is moved from its mounting position to its retaining position.

The retaining arrangement may comprise first and second inner retaining members, each pivotably movable between respective mounting and retaining positions, the driving member being located between the first and second inner retaining members.

Each of the first inner retaining member and the second inner retaining member may be movable between a respective mounting position and retaining position. When the first and second inner retaining members move from their respective mounting position to their respective retaining position, the amount by which the first and second inner retaining members projects outwardly of the load bearing roller may increase.

The driving member may be a tapered body and the driving member may be arranged such that in its mounting position a relatively narrow part of the driving member maybe arranged between the first inner retaining member and the second inner retaining member, and in its retaining position a relatively wide part of the driving member may be arranged between the first inner retaining member and the second inner retaining member.

When the driving member is in its retaining position, the tapered body may force the first inner retaining member and the second inner retaining member to pivot from their respective mounting positions to their respective retaining positions.

The driving member may be arranged such that, in its retaining position, at least a portion of the driving member is configured for engagement with an inner side of a wheel weight supported on the at least one load bearing roller.

Moving the retaining member from its mounting position to its retaining position may increase the amount by which the driving member projects outwardly from the at least one load bearing roller.

The actuator mechanism may further comprise a rotatable shaft extending between the inner and outer frame members, a lever arranged at an outer end of the shaft and coupled to the shaft to rotate the shaft about its longitudinal axis, the shaft operatively coupled to the at least one inner retaining member, such that in use, rotation of the lever causes the at least one inner retaining member to move between its mounting and retaining positions.

The shaft may be operatively coupled to the driving member such that, in use, rotation of the lever causes the driving member to move between its mounting position and its retaining position.

The actuator mechanism may further comprise a cam member coupled to the shaft at an inner end of the shaft, the cam member arranged to operatively engage the driving member such that, in a first position the cam member holds the driving member in the retaining position and in a second position the cam member allows the driving member to move to the mounting position, the arrangement may be configured such that in use, rotation of the lever moves the cam member between the first and second positions.

In this way a user may conveniently change the configuration of the wheel weight handling device even after the wheel weight handling device has been inserted into the passage of the wheel weight.

The actuation mechanism may include a locking arrangement to lock actuator mechanism in a configuration at which the at least one inner retaining member is held in its retaining position.

The inner frame member may comprise a base plate to which the at least one load bearing roller is mounted and a cover removably mounted to the base plate, the at least one inner retaining member being located between the base plate and the cover.

The cover may be removable to allow access to the retaining arrangement and/or the locking arrangement.

The wheel weight handling device may further comprise a loading member for receiving a loading arm. The loading member may be a cavity for receiving the loading arm e.g. of a fork lift. The wheel weight may have a pair of loading members, each comprising a cavity for reciveing a respective loading arm. Alternatively, the, or each, loading member may be a protrusion for facilitating attachment to the loading arm in a different manner. For example, the loading member may facilitate attachment to a crane.

The wheel weight handling device may have the shape of an arch (e.g. a parabolic arch or a circular arch), with a channel extending through it. For example, the wheel weight handling device may be U-shaped, or may have the shape of half of a cylindrical shell. This shape can allow a user to easily locate the wheel weight handling device about a wheel hub or a stub axle. Where the wheel weight has a pair of loading members, the loading members may be provided on opposite sides of the channel.

According to an aspect of the invention, a method of using the wheel weight described above comprises:
inserting the wheel weight handling device into a passage of a wheel weight, with the at least one inner retaining member in the mounting position and the at least one outer retaining member removed;
moving the at least one inner retaining member to the retaining position and attaching the at least one outer retaining member to the frame of the wheel weight handling device.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a perspective view of a wheel weight handling device according to an embodiment of the invention;
Fig. 2 shows a perspective view of the wheel weight handling device of Fig. 1 mounted to a wheel weight;
Fig. 3 shows an end view of the wheel weight handling device of Fig. 1 mounted to a wheel weight;
Fig. 4 shows a cross sectional view of the wheel weight handling device of Fig. 1 mounted to a wheel weight;
Fig. 5 shows an end view of the wheel weight handling device of Fig. 1; and
Fig. 6 illustrates a method according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a wheel weight handling device. The wheel weight handling device can be used to assist a user in mounting and removing a wheel weight to/from the wheel of an agricultural vehicle. The wheel weight is, for example, a ring-shaped weight comprising an inner end, an outer end and a passage extending between the inner end and the outer end. The passage is an elliptical tube (e.g. a cylindrical tube) defined by an internal wall of the wheel weight.

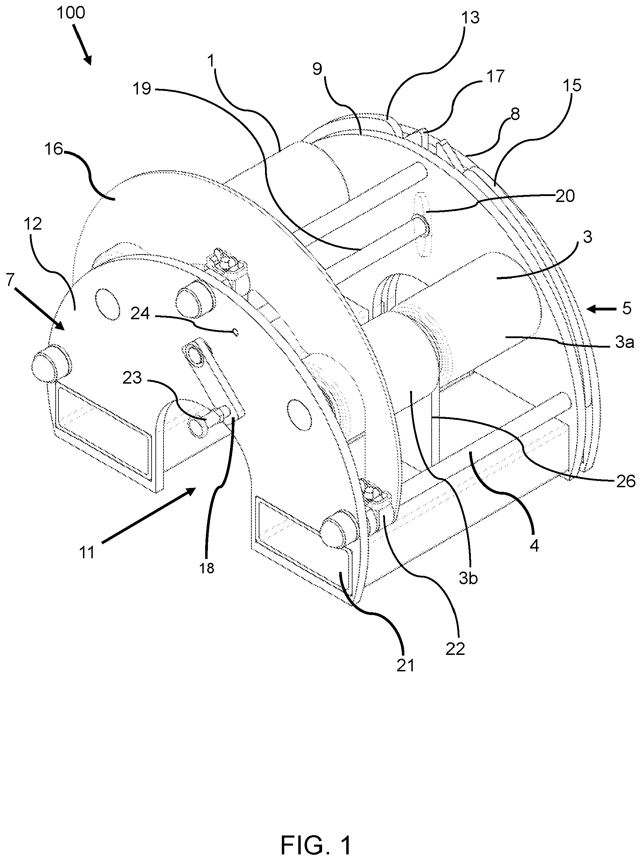

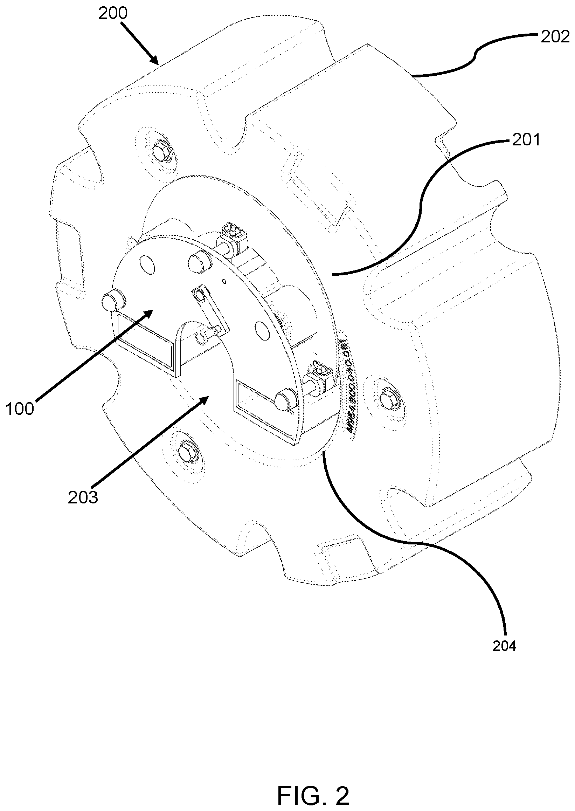

Fig. 1 shows a wheel weight handling device 100 according to an embodiment of the invention. The wheel weight handling device 100 comprises a frame including an (axially) inner frame member 5, an (axially) outer frame member 7 and two load bearing rollers 1, 3 between them. The load bearing rollers 1, 3 are arranged to support the wheel weight (200, Fig. 2) when the wheel weight is mounted to the wheel weight handling device 100. Each load bearing roller comprises a cylindrical body that is rotatable about its longitudinal axis (i.e. about its rotation axis). The rotation axes of the two load bearing rollers are parallel to one another. In use, the wheel weight rests on upper surface regions of the load bearing rollers. Providing two load bearing rollers to support the wheel weight avoids the need for multiple support structures, which can help to minimize productions costs.

The frame also comprises a plurality of support members 4 which extend between the inner support member 5 and the outer support member 7. The inner frame member 5 comprises two opposing plates, cover plate 8 and base plate 9. The cover plate 8 and the base plate 9 are spaced apart from one another, and spaced apart from a top plate 12 of the outer frame member 7, along the rotation axes of the load bearing rollers 1, 3. As illustrated in Fig. 1, the cover plate 8, base plate 9 and top plate 12 each have the shape of an arch (i.e. they are substantially U-shaped). In this arrangement, the overall shape of the wheel weight handling device 100 is accordingly substantially U-shaped. The shape of the wheel weight handling device complements the shape of the passage extending through the wheel weight, which can help to facilitate convenient mounting of the wheel weight handling device to the wheel weight.

The load bearing rollers 1, 3 extend between the top plate 12 and the base plate 9, and are positioned above the inside arch of each of the top plate 12 and the base plate 9. A channel 11 extends between inner arch of the top plate 12 to the inner arch of base plate 9, uninterrupted by the load bearing rollers 1, 3 or the support members 4. That is, the channel 11 between the inner arches is empty. With this arrangement, the wheel handling device 100 can be conveniently placed around the hub or stub axle of the wheel on which the wheel weight is to be mounted, since the channel 11 can accommodate the hub or stub axle.

In order to mount the wheel weight to the wheel of the vehicle, the wheel weight is first mounted to the wheel weight handling device 100. To mount the wheel weight to the wheel weight handling device 100, the wheel weight handling device 100 is inserted into the passage of the wheel weight, and positioned so that the load-bearing rollers 1, 3 engage the wall of the passage (see Fig. 2). Providing the load bearing rollers 1, 3 arranged to engage the wall defining the passage can help to assist a user in locating the wheel weight handling device 100 inside the passage.

Once the wheel weight handling device 100 has been inserted into the passage (see Fig. 2), it is desirable to maintain the position of the wheel weight handling device 100 relative to the wheel weight, especially during mounting of the wheel weight to the wheel or removal of the wheel weight from the wheel. In particular, the wheel weight handling device 100 should be prevented from moving backwards out of the passage. To assist with this, the wheel weight handling device 100 includes a retaining arrangement.

The retaining arrangement has a mounting configuration for use when inserting the wheel weight handling device 100 into the passage of the wheel weight and a retaining configuration for limiting movement of the wheel weight handling device 100. The retaining arrangement includes at least one retaining member 13, 15 which is movable between a retracted, mounting position (in the mounting configuration) and an extended, retaining position (in the retaining configuration). The retaining arrangement is held in its mounting configuration, with the at least one retaining member 13, 15 held in its mounting position, while the wheel weight handling device 100 is inserted into the passage of the wheel weight. Keeping the at least one retaining member 13, 15 in its mounting position during the mounting process can help to reduce the likelihood that the retaining member is brought into contact with the wheel weight during insertion of the wheel weight handling device 100 into the passage, which can help to achieve a smooth insertion process. Once the wheel weight handling device 100 has been inserted into the passage and the load bearing rollers 1, 3 have been brought into contact with the wall of the passage, the wheel weight handling device 100 can be moved to its retaining configuration. The at least one retaining member 13, 15 is moved radially outwardly (upwardly), beyond the perimeter of the opening defining the passage in the inner surface of the wheel weight, so as to locate behind a radially extending, inner axial surface of the wheel weight. In this way, the at least one retaining member can obstruct backwards movement of the wheel weight handling device 100 (i.e. it can help to prevent the wheel weight handling device 100 from moving backwards, against the direction of insertion, through the passage of the wheel weight). Accordingly, in the retaining configuration, the at least one retaining member 13, 15 acts to limit movement of the wheel weight handling device relative to the wheel weight. Looked at another way, the at least one retaining member 13, 15 prevents the wheel weight from slipping off the inner end of the load bearing rollers 1, 3.

In Fig. 1, the retaining arrangement is shown in its retaining configuration. The retaining arrangement includes a first inner retaining member 13 and a second inner retaining member 15 which are mounted to the frame, between the cover plate 8 and the base plate 9. The first and second inner retaining members 13, 15 are each pivotally mounted to a respective support member 4, so as to be pivotally movable about the respective support member 4. The first inner retaining member 13 and the second inner retaining member 15 project outwardly, above the cylindrical surfaces of the load bearing rollers 1, 3 in the retaining configuration. Accordingly, in use, the load bearing rollers 1,3 can be maintained in contact with the surface of the passage and the inner retaining members 13, 15 can be positioned outside of the passage, projecting outwardly from the perimeter of the passage opening, so that they are located for engagement with an inner surface of the wheel weight.

The retaining arrangement also includes an outer retaining member 16, which is arranged at an outer end of the wheel weight handling device opposite the inner retaining members 13, 15. The outer retaining member 16 comprises an arch-shaped plate which is releasably mounted to the frame. When the outer retaining member 16 is mounted to the frame, it extends radially outwardly of the load-bearing rollers 1, 3. For example, the outer retaining member is attached to support members 4 using clips 22 or other releasable attaching means. The outer retaining member 16 is arranged to engage a radially extending outer axial surface of the wheel weight, to limit axial movement of the wheel weight handing device 100 relative to the wheel weight. The position of the outer retaining member can be adjusted by changing the location at which the outer retaining member 16 is attached to the support members. In an embodiment, clips 22 for holding the outer retaining member are slidably mounted to three of the support members 4 and can be clamped to the support members to fix the axial position of the outer retaining member. In this way, it is possible to alter the axial separation between the base plate 9 and the outer retaining member 16. This can help to provide convenient mounting of the wheel weight handling device 100 to the wheel weight. In particular, the axial separation between the outer retaining member 16 and the inner retaining members 13, 15 can be adjusted to accommodate the wheel weights of different axial thickness.

Providing the combination of inner retaining members 13, 15 for engaging an inner surface of the wheel weight and outer retaining member 16 for engaging an outer surface of the wheel weight, the inner and outer surface of the wheel weight being on opposite axial ends of the passage through the wheel weight, can help to reduce the risk of movement of the wheel weight handling device 100 relative to the wheel weight during the mounting or de-mounting to/from the wheel weight.

The wheel weight handling device includes an actuation mechanism configured to move the retaining arrangement between its mounting configuration and its retaining configuration. The actuation mechanism can allow a user to conveniently change the configuration of the retaining device.

In Fig. 1, the actuation mechanism comprises a lever 18 which is operably coupled to the inner retaining members 13, 15 to cause them to move between their respective mounting position and retaining position. The lever 18 is coupled to a driving member 17 which is positioned between the first and second inner retaining members 13, 15. The driving member can be operated to drive the first and second inner retaining members 13, 15 between their mounting positions and their retaining positions. When the driving member 17 is moved from its mounting position to its retaining position, it drives the first inner retaining member and the second inner retaining member apart causing them to pivot away from one another

In Fig. 1, the driving member 17 comprises a wedge-shaped body. When the driving member is in its retaining position, a relatively wide portion of the wedge is positioned between the first inner retaining member 13 and the second inner retaining member 15 to drive the inner retaining members apart. The driving member 17 can be moved downwardly, to its mounting position, in which a relatively thin portion of the wedge is positioned between the first inner retaining member 13 and the second inner retaining member 15 (or in which the wedge is no longer positioned between the first and second inner retaining members). The first and second inner retaining members are biased towards their respective mounting positions. Movement of the driving member from its retaining position to its mounting position allows the first and second inner retaining members 13, 15 to pivot towards one another, to their respective mounting positions.

As shown in Fig 1, when the driving member 17 is in its retaining position, it projects outwardly in a similar way to the first and second inner retaining members 13, 15. Accordingly, in use, the driving member 17 can also act to limit movement of the wheel weight handling device.

In Fig. 1, the lever 18 is coupled to the driving member 17 by the combination of a rotatable shaft 19 and a cam 20. The rotatable shaft 19 extends between the top plate 12 and the base plate 9. The lever 18 is coupled to the shaft 19 to cause it to rotate about its longitudinal axis. The shaft 19 is coupled to the cam, which is in turn coupled to the driving member 17. Accordingly, by using the lever 18 to rotate the shaft, it is possible to change the position of the driving member 17 thereby changing the position of the first and second inner retaining members 13, 15. In an alternative arrangement, the cam 20 could be arranged to act directly on the first and second inner retaining members 13, 15 or the shaft 19 could be operatively connected to the first and second inner retaining members by another mechanism, such as a gear mechanism for example, configured such that rotation of the shaft causes the first and second inner retaining members to move between their mounting and retaining positions.

Cover plate 8 may be detachably mounted to the wheel weight handling device 100, to allow access to the inner retaining members 13, 15 and actuation mechanism for inspection and/or repair and maintenance.

The wheel weight handling device 100 also comprises a locking arrangement for locking the lever 18 in a retaining position at which the inner retaining members are in their extended retaining positions. Locking the position of the lever 18 prevents movement of the inner retaining members 13, 15. In Fig. 1, the locking arrangement includes a pin 23 attached to the lever 18 and a hole (not shown) for receiving and end of the pin, the pin 23 being biased to inwardly to engage in the hole. A second hole 24 may be provided to hold the lever in the mounting position. To move the lever 18 from the mounting position to the retaining position, the pin is pulled outwardly to release the pin from the second hole 24, the lever moved to the retaining position and the pin released so that it is biased to engage in the first locking hole.

The wheel weight handling device 100 shown in Fig.1 also includes two mounting channels 21 which extend in an axial direction (e.g. parallel to the axes of rotation of the load bearing rollers) through the wheel weight mounting device 100. The mounting channels are rectangular tubes which are arranged to receive the prongs of a loading fork. That is, each prong of the fork can be inserted into a respective mounting channel 21, enabling the wheel weight handling device 100 (and the wheel weight, when mounted to the wheel weight handling device 100) to be conveniently lifted and moved.

Fig. 2 shows the wheel weight handling device 100 of Fig. 1 mounted to a wheel weight 200. The wheel weight 200 comprises a ring-shaped body having an outer end surface 201, and an inner end surface 202 opposite the outer surface 201. A passage 203 extends through the wheel weight 200. The passage 203 extends between an elliptical aperture in the outer end surface 201 and an elliptical aperture in the inner surface 202. As shown in Fig. 2, the wheel weight handling device 100 is received in the passage 203, with the outer retaining member 16 arranged outside of the passage and projecting radially outwardly from the outer surfaces of the load bearing rollers past the perimeter of the passage. The outer retaining member 16 is accordingly positioned to engage the outer surface 201 of the wheel weight 200.

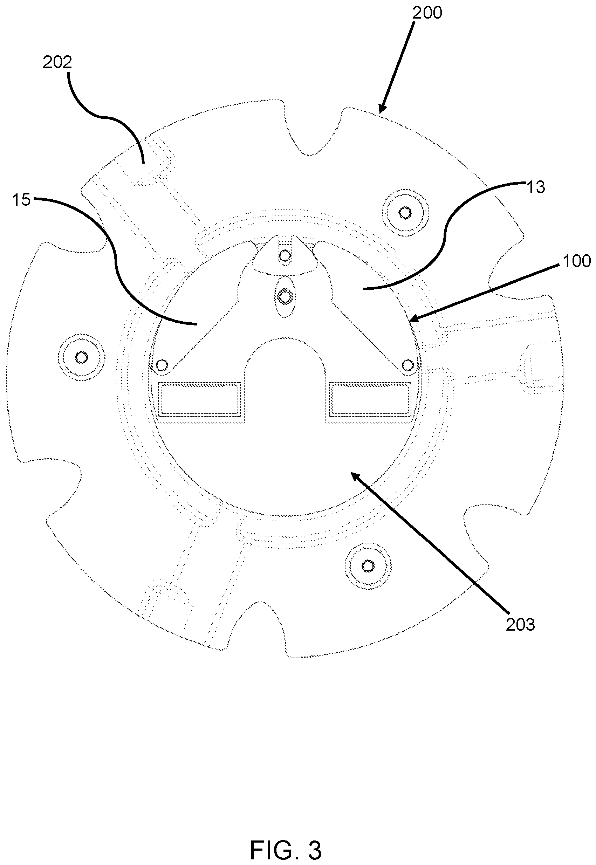

Fig. 3 shows the wheel weight handling device 100 of Fig. 1 mounted to a wheel weight 200, viewed facing the inner surface 202 of the wheel weight and with the cover plate 8 removed. In the arrangement shown in Fig. 3, the inner retaining members 13, 15 are in their retaining positions. Accordingly, they project radially outwardly beyond the perimeter of the passage 203 to engage the inner axial surface 202 of the wheel weight 200.

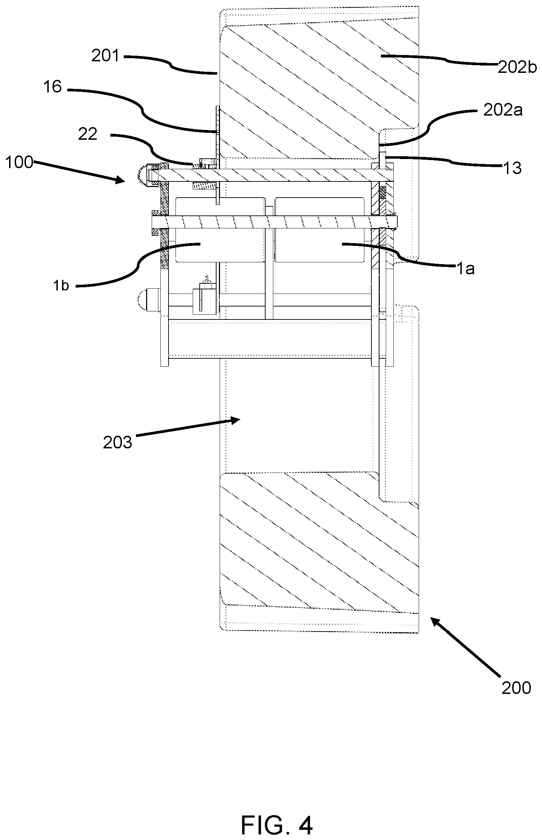

Fig. 4 shows a side view of the wheel weight handling device 100, in cross section, mounted to a wheel weight 200. The wheel weight handling device 100 is received in the passage 203 of the wheel weight 200 with the load bearing rollers 1, 3 positioned to engage the surface of the passage 203. In Fig. 3, the retaining arrangement is arranged in its retaining configuration. Accordingly, the inner retaining member 13 projects beyond the perimeter of the passage 203 at the inner surface 202 of the wheel weight to engage the inner surface 202 of the wheel weight. Additionally, the outer retaining member 16 projects beyond the perimeter of the passage 203 in an outer surface 201 of the wheel weight to engage the outer surface 201 of the wheel weight 200. In this way, the inner retaining member 13 and the outer retaining member 16 are arranged to obstruct movement of the wheel weight handling device through the passage 203. Movement of the wheel weight handling device through the passage 203 is limited, which can help to achieve safe and convenient movement of the wheel weight whilst it is mounted to the wheel weight handling device 100. As illustrated in Fig. 4, the inner end surface may be stepped to define an axially inner surface region 202a immediately surrounding the passage with which the inner retaining members engage and a radially outer inner surface region 202b which is spaced axially from the radially inner end surface region.

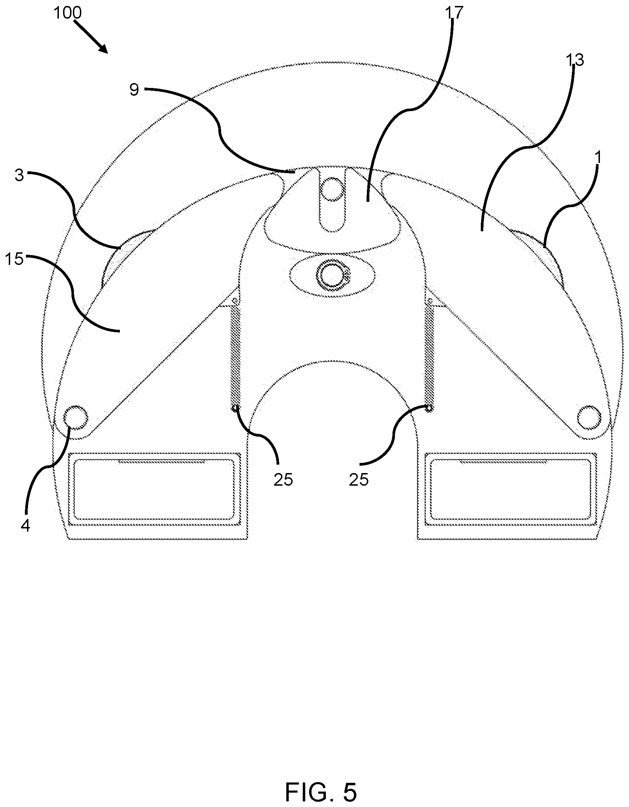

Fig. 5 shows an end view of the wheel weight handling device 100 of Fig. 1, with the cover plate 8 removed. In Fig. 5, the wheel weight handling device is configured for mounting to the wheel weight. The retaining arrangement is in its mounting configuration. That is, the first inner retaining member 13 and the second inner retaining member 15 are in their respective mounting positions. The driving member 17 is also in its mounting position, with a relatively thin part of the wedge arranged between the first inner retaining member 13 and the second inner retaining member 15.

In use, the wheel weight handling device 100 is inserted into the passage of the wheel weight with the retaining arrangement in its mounting configuration. The load bearing rollers 1, 3 are brought into contact with the surface of the passage, so that they are positioned to support the wheel weight. The wheel weight handling device 100 should be positioned so that the first inner retaining member 13 and the second inner retaining member 15 are positioned axially outside of the passage. To do this, the wheel weight handling device 100 may be moved into the passage and then lifted to bring it into contact with the surface of the passage. To avoid damage, and to simplify the mounting process, the first inner retaining member 13 and the second inner retaining member 15 are arranged radially inwardly of the our cylindrical surfaces of the load bearing rollers 1, 3 arranged to engage the surface of the passage. When the wheel weight handling device 100 is positioned inside the passage, the load bearing rollers engage the tubular wall of the passage at respective locations around the circumference of the passage. When the first inner retaining member 13 and the second inner retaining member 15 are in their mounting positions, they are arranged at radial positions inside the circumference of the passage. Providing this arrangement can make it easier to avoid contact between the inner retaining members 13, 15 and the surface of the passage of the wheel weight during mounting. When the inner retaining members 13, 15 are moved to their retaining configuration, they can be forced by the driving member to pivot outwardly to a radial position outside of the surface of the rollers where the rollers engage the surface of the passage. In this way, the inner retaining members can be moved to a position in which they project beyond the perimeter of the passage of the wheel weight to located behind or engage an axially inner surface of the wheel weight.

As shown in Fig. 5, the first inner retaining member 13 and the second inner retaining member 15 are coupled to respective biasing members 25. The biasing members 25 may be in the form of expansion springs and are arranged to bias the inner retaining members 13, 15 towards their mounting positions. In order to move the first inner retaining member 13 and the second inner retaining member 15 from their mounting positions to their retaining positions, the driving member 17 must overcome the biasing force holding the first inner retaining member 13 and the second inner retaining member 15 in their mounting positions.

The load bearing rollers 1, 3 are able to support wheel weights 200 having a range of inner passage diameters and depths. The load bearing rollers 1, 3, may be made of, or have an outer surface made of (or coated with), a material which inhibits the wheel weight from slipping along the load bearing rollers, such as synthetic or natural rubber or other polymeric materials. In the embodiment shown, the first and second load bearing rollers 1, 3 are each divided into two portions, an inner portion 1a, 3a and outer portion 1b, 3b. The axles on which the rollers are mounted are each supported between the inner and outer portions of their respective rollers by a support plate 26 mounted to an upper surface of a respective one of the mounting channels 21. However, in other embodiments the load bearing rollers 1, 3, need not be divided into two parts
A wheel weight 200 supported on the load bearing rollers 1, 3, can be rotated abut its central axis to assist in positioning the wheel weight for attachment to a wheel.

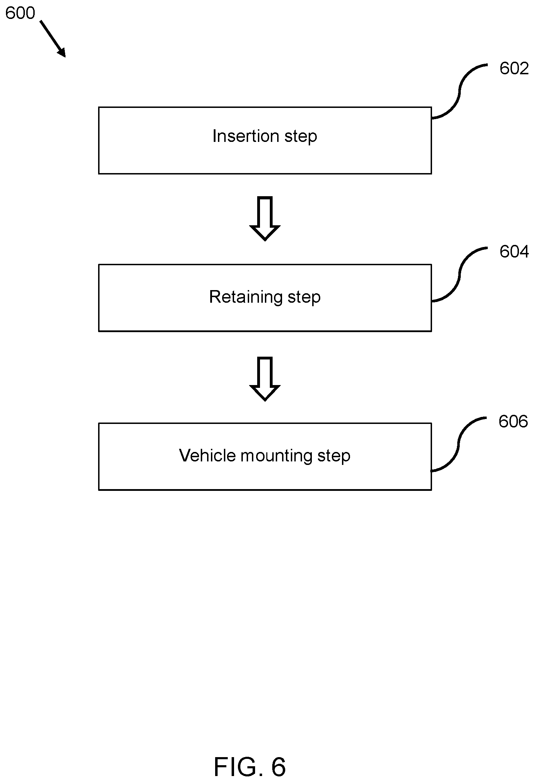

Fig. 6 illustrates a method 600 of using a wheel weight handling device 100 according to an embodiment of the invention. The wheel weight handling device 100 includes an outer retaining member, which is initially detached from the frame.

In an insertion step 602, the wheel weight handling device is inserted into a passage of a wheel weight, with the at least one inner retaining member in its mounting position. At this point, the at least one outer retaining member is not attached to the frame. The wheel weight handling device may be inserted into the passage of the wheel weight using a loading apparatus, such as a loading fork. In some embodiments, the wheel weight handling device may include a depth indicator, to assist a user in determining how far the wheel weight handling device should be inserted into the passage. The wheel weight handling device is inserted such that the at least one retaining member is arranged outside of the passage, while the load bearing rollers should be arranged inside the passage. The wheel weight handling device is then lifted, by the loading apparatus, to a position in which the at least one roller engages the surface of the passage of the wheel weight.

Once the wheel weight handling device is received in the passage of the wheel weight, with the at least one load bearing roller engaging the surface of the passage, movement of the wheel weight mounting device relative to the wheel weight should be avoided. Accordingly, in a retaining step 604, the at least one inner retaining member is moved from its mounting position to its retaining position. When the at least one inner retaining member is in its retaining position, it locates behind and may contact an axial inner surface of the wheel weight. This stops the wheel weight from sliding off the load bearing roller. Additionally, the at least one outer retaining member is attached to the frame of the wheel weight handling device at a location where it engages (or is in close proximity to) an axial outer surface of the wheel weight. These acts can be carried out in any order; the inner retaining member can be moved to its mounting position either before or after the outer retaining member is attached to the frame. Attaching the outer retaining member to the frame after inserting the wheel weight handling device into the passage of the wheel weight can help to ensure the operator has good visibility while inserting the wheel weight handling device into the wheel weight. This can help to reduce the risk of improper mounting of the wheel weight to the wheel weight handling device, thereby improving user safety and reducing the risk of damage to the wheel weight handling device during use. However, in other embodiments the outer retaining member 16 is mounted to the frame before a wheel weight is mounted to the handling device 100 and indeed the outer retaining member16 need not be removably mounted to the frame.

Once the retaining step 604 has been completed, the wheel weight can be mounted to the wheel of an agricultural vehicle. In a vehicle mounting step 606, the wheel weight handling device is used to assist mounting the wheel weight to the wheel of the agricultural vehicle.

It will be appreciated that variations of the embodiments described above are possible.

The wheel weight handling device may comprise a different number of load bearing rollers. For example, the wheel handling device may comprise a single load bearing roller, or more than two load-bearing rollers.

The load bearing roller/rollers need not be cylindrical in shape. The roller/rollers can be any shape capable of rotating and engaging the surface of the passage of the wheel weight whilst enabling the wheel weight to be rotated about its axis. For example, the roller/rollers may be ball-shaped.

The base plate, cover plate and/or top plate need not be U-shaped. Any or each of the plates may have the shape of a circular arch. Alternatively, any or each of the plates may be semi-circular, or may have any other shape. Preferably each of plates comprises an opening for receiving a wheel hub.

The wheel weight handling device may comprise a different number of inner retaining members. For example, the wheel weight handling device may comprise a single inner retaining member or more than two inner retaining members.

The inner retaining members may not be pivotally mounted to the frame. Instead, the inner retaining member may be arranged to move linearly relative to the frame.

The inner retaining member or inner retaining members project outwardly of the load bearing rollers in their retaining positions. Preferably, in the mounting position, the inner retaining member/retaining members do not protrude beyond the outer surfaces of the rollers. That is, in their mounting positions, the inner retaining members are arranged inside an imaginary circle encircling the first and second load bearing rollers, wherein the upper half of the imaginary circle touches the outer surfaces of the first and second load bearing roller. However, the inner retaining members could potentially project outwardly of the rollers even when in the mounting position, provided the rollers and inner retaining members can be passed through the passage in the weight and the device then lifted to bring the rollers into engagement with the inner surface of the passage.

The outer retaining member may not be removable from the frame or may not have a curved shape.

The actuation mechanism may differ to that described, as long as the actuation mechanism is capable of causing the retaining arrangement to move between its mounting configuration and its retaining configuration. **In** particular, the driving member may not comprise a wedge, and may not be arranged to move linearly.

The wheel weight handling device need not comprise mounting channels. **In** some embodiments, the wheel weight handling device may comprise alternative means for attaching the wheel weight handling device to lifting machinery. For example, the wheel weight handling device may comprise means for attachment to a crane.

The wheel weight handling device may comprise a single biasing member, or multiple biasing members.

In an example, the passage has a diameter of at least 400 mm and the mass of the wheel weight is at least 200 kg. Accordingly, in some embodiments, the load-bearing may be capable of supporting a mass of at least 200 kg

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

## Claims

1. A wheel weight handling device (100) for use in mounting a wheel weight (200) to a wheel of an agricultural vehicle, the wheel weight comprising a passage (203) extending axially through it from an outer side (201) of the wheel weight to an inner side (202) of the wheel weight; the wheel weight handling device comprising:
a frame (1, 3, 4, 5, 7) at least part of which is receivable in the passage of the wheel weight, the frame further comprising at least one load bearing roller (1, 3) for engaging an inner surface of the passage, the at least one load bearing roller being rotatable about a rotation axis; and
a retaining arrangement (13, 15, 16, 17, 18, 19, 20, 22, 25) for limiting movement of the wheel weight relative to the wheel weight handling device in use, the retaining arrangement comprising at least one inner retaining member (13, 15) mounted to the frame for movement between a retracted, mounting position and an extended, retaining position for engagement with an inner side surface of the wheel weight when supported on the at least one load bearing roller;
the retaining arrangement having an actuator mechanism (17, 18, 19, 20, 25) for moving the at least one inner retaining member between the mounting and retaining positions.

2. The wheel weight handling device (100) of claim 1, wherein moving the at least one inner retaining member (13, 15) from its mounting position to its retaining position increases the amount by which the at least one inner retaining member projects outwardly from the at least one load bearing roller (1, 3).

3. The wheel weight handling device (100) of claim 1 or claim 2, wherein the frame comprises a first load bearing roller (1) and a second load bearing roller (3), wherein the first load bearing roller is arranged in parallel with the second load bearing roller.

4. The wheel weight handling device (100) of any one of claims 1 to 3, wherein the retaining arrangement (13, 15, 16, 17, 18, 19, 20, 22, 25) further comprises a biasing member (25) arranged to urge the at least one inner retaining member to the mounting position.

5. The wheel weight handling device (100) of any one of claims 1 to 4, wherein the frame comprises an inner frame member (5) and an outer frame member (7), the at least one load bearing roller (1, 3) being mounted between the inner and outer frame members, at least the inner frame member (5) and the at least one load bearing roller (1, 3) being receivable in the passage (203) of the wheel weight, the at least one inner retaining member (13, 15) being movably mounted to the inner frame member(5) and wherein, optionally, the frame further comprises a plurality of support members (4) extending between the inner and outer frame members along respective longitudinal axes.

6. The wheel weight handling device (100) of any one of claims 1 to 5, wherein the retaining arrangement (13, 15, 16, 17, 18, 19, 20, 22, 25) further comprises at least one outer retaining member (16) for engagement with an outer side surface (201) of the wheel weight, the at least one outer retaining member being mounted or mountable to the frame so as to be spaced apart from the at least one inner retaining member (13, 15) in a direction along the rotation axis and wherein, optionally, the at least one outer retaining member (16) is adjustably mounted or mountable to the frame (1, 3, 4, 5, 7) to enable the axial spacing between the at least one outer retaining member (16) and the at least one inner retaining member (13, 15) to be adjusted.

7. The wheel weight handling device (100) of claim 6, wherein the at least one outer retaining member (16) is removably mounted or mountable to the frame (1, 3, 4, 5, 7).

8. The wheel weight handling device (100) of any one of claims 1 to 7, wherein the actuator mechanism (17, 18, 19, 20, 25) comprises:
a driving member (17) having a mounting position and a retaining position, wherein the driving member is movable between its mounting position and its retaining position, the driving member operatively coupled to the at least one inner retaining member (13, 15) such that the at least one inner retaining member is moved from its mounting position to its retaining position when the driving member is moved from its mounting position to its retaining position.

9. The wheel weight handling device (100) of claim 8, wherein the retaining arrangement (13, 15, 16, 17, 18, 19, 20, 22, 25) comprises first and second inner retaining members (13, 15), each pivotably movable between respective mounting and retaining positions, the driving member (17) being located between the first and second inner retaining members.

10. The wheel weight handling device (100) of claim 9 wherein the driving member (17) is a tapered body and wherein the driving member is arranged such that in its mounting position a relatively narrow part of the driving member is arranged between the first inner retaining member (13) and the second inner retaining member (15), and in its retaining position a relatively wide part of the driving member is arranged between the first inner retaining member and the second inner retaining member.

11. The wheel weight handling device (100) of any of claims 8 to 10, wherein the driving member (17) is arranged such that, in its retaining position, at least a portion of the driving member is configured for engagement with an inner side surface (202) of a wheel weight supported on the at least one load bearing roller (1, 3) when in the retaining position.

12. The wheel weight handling device (100) of claim 5, or any of claims 6 to 11 when dependent on claim 5, wherein the actuator mechanism (17, 18, 19, 20, 25) further comprises a rotatable shaft (19) extending between the inner (5) and outer frame (7) members, a lever arranged (18) at an outer end of the shaft and coupled to the shaft to rotate the shaft about its longitudinal axis, the shaft operatively coupled to the at least one inner retaining member (13, 15), such that in use, rotation of the lever causes the at least one inner retaining member to move between its mounting and retaining positions.

13. The wheel weight handling device (100) of claim 12 when dependent on any one of claims 8 to 11 via claim 5, wherein the shaft (19) is operatively coupled to the driving member (17) such that, in use, rotation of the lever (18) causes the driving member to move between its mounting position and its retaining position and wherein, optionally, the actuator mechanism further comprises a cam member (20) coupled to the shaft (19) at an inner end of the shaft, the cam arranged to operatively engage the driving member (17) such that, in a first position the cam member holds the driving member in the retaining position and in a second position the cam member allows the driving member to move to the mounting position, the arrangement configured such that in use, rotation of the lever (18) moves the cam member between the first and second positions.

14. The wheel weight handling device (100) of claim 12 or claim 13, wherein the actuation mechanism (17, 18, 19, 20, 25) includes a locking arrangement (23) for locking the actuator mechanism in a configuration in which the at least one inner retaining member (13, 15) is held in its retaining position.

15. A method of using the wheel weight handling device (100) according to claim 7, or any of claims 8 to 14 when dependent on claim 7, the method comprising:
inserting the wheel weight handling device into a passage (103) of a wheel weight (200), with the at least one inner retaining member (13, 15) in the mounting position and the at least one outer retaining member (16) removed;
moving the at least one inner retaining member (13, 15) to its retaining position and attaching the at least one outer retaining member (16) to the frame (1, 3, 4, 5, 7) of the wheel weight handling device.

## Patentansprüche

1. Radgewicht-Handhabungsgerät (100) zur Verwendung für eine Montage eines Radgewichts (200) an einem Rad eines landwirtschaftlichen Fahrzeugs, wobei das Radgewicht einen Durchgang (203) aufweist, der sich axial hierdurch erstreckt von einer äußeren Seite (201) des Radgewichts zu einer inneren Seite (202) des Radgewichts, wobei das Radgewicht-Handhabungsgerät aufweist:
einen Rahmen (1, 3, 4, 5, 7), von dem mindestens ein Teil in dem Durchgang des Radgewichts aufgenommen werden kann, wobei der Rahmen des Weiteren mindestens eine eine Last abstützende Walze (1, 3) für eine Wechselwirkung mit einer inneren Fläche des Durchgangs aufweist, wobei die mindestens eine eine Last abstützende Walze um eine Rotationsachse verdrehbar ist; und
eine Halteanordnung (13, 15, 16, 17, 18, 19, 20, 22, 25) zur Begrenzung einer Bewegung des Radgewichts relativ zu dem Radgewicht-Handhabungsgerät während des Gebrauchs, wobei die Halteanordnung mindestens ein inneres Halteelement (13, 15) aufweist, welches mit dem Rahmen montiert ist unter Ermöglichung einer Bewegung zwischen einer eingezogenen Montagestellung und einer ausgefahrenen haltenden Stellung für eine Wechselwirkung mit einer inneren Seitenfläche des Radgewichts bei Abstützung an der mindestens einen eine Last abstützenden Walze,
wobei die Halteanordnung einen Aktuator-Mechanismus (17, 18, 19, 20, 25) für eine Bewegung des mindestens einen inneren Halteelements zwischen der Montagestellung und der haltenden Stellung aufweist.

2. Radgewicht-Handhabungsgerät (100) nach Anspruch 1, wobei eine Bewegung des mindestens einen inneren Halteelements (13, 15) von seiner Montagestellung in seine haltende Stellung das Ausmaß vergrößert, um welches das mindestens eine innere Halteelement nach außen von der mindestens einen eine Last abstützenden Walze (1, 3) hervorsteht.

3. Radgewicht-Handhabungsgerät (100) nach Anspruch 1 oder Anspruch 2, wobei der Rahmen eine erste eine Last abstützende Walze (1) und eine zweite eine Last abstützende Walze (3) aufweist und die erste eine Last abstützende Walze parallel zu der zweiten eine Last abstützenden Walze angeordnet ist.

4. Radgewicht-Handhabungsgerät (100) nach einem der Ansprüche 1 bis 3, wobei die Halteanordnung (13, 15, 16, 17, 18, 19, 20, 22, 25) des Weiteren ein beaufschlagendes Element (25) aufweist, welches geeignet angeordnet ist, um das mindestens eine innere Halteelement in Richtung der Montagestellung zu beaufschlagen.

5. Radgewicht-Handhabungsgerät (100) nach einem der Ansprüche 1 bis 4, wobei der Rahmen ein inneres Rahmenelement (5) und ein äußeres Rahmenelement (7) aufweist, die mindestens eine eine Last abstützende Walze (1, 3) zwischen dem inneren und äußeren Rahmenelement montiert ist, wobei zumindest das innere Rahmenelement (5) und die mindestens eine eine Last abstützende Walze (1, 3) in dem Durchgang (203) des Radgewichts aufgenommen werden können, das mindestens eine innere Halteelement (13, 15) beweglich an dem inneren Rahmenelement (5) montiert ist und optional der Rahmen des Weiteren mehrere Abstützelemente (4) aufweist, die sich zwischen dem inneren und äußeren Rahmenelement entlang der zugeordneten Längsachsen erstrecken.

6. Radgewicht-Handhabungsgerät (100) nach einem der Ansprüche 1 bis 5, wobei die Halteanordnung (13, 15, 16, 17, 18, 19, 20, 22, 25) des Weiteren mindestens ein äußeres Halteelement (16) für eine Wechselwirkung mit einer äußeren Seitenfläche (201) des Radgewichts aufweist, das mindestens eine äußere Halteelement an dem Rahmen derart montiert ist oder montierbar ist, dass dieses in eine Richtung entlang der Rotationsachse beabstandet von dem mindestens einen inneren Halteelement (13, 15) angeordnet ist und wobei optional das mindestens eine äußere Halteelement (16) einstellbar an dem Rahmen (1, 3, 4, 5, 7) montierbar ist oder montiert ist zur Ermöglichung einer Einstellung des axialen Abstands zwischen dem mindestens einen äußeren Halteelement (16) und dem mindestens einen inneren Halteelement (13, 15).

7. Radgewicht-Handhabungsgerät (100) nach Anspruch 6, wobei das mindestens eine äußere Halteelement (16) entfernbar an dem Rahmen (1, 3, 4, 5, 7) montiert oder montierbar ist.

8. Radgewicht-Handhabungsgerät (100) nach einem der Ansprüche 1 bis 7, wobei der Aktuator-Mechanismus (17, 18, 19, 20, 25) aufweist:
ein antreibendes Element (17), welches eine Montagestellung und eine haltende Stellung aufweist, wobei das antreibende Element zwischen seiner Montagestellung und seiner haltenden Stellung bewegbar ist, das antreibende Element betrieblich mit dem mindestens einen inneren Halteelement (13, 15) derart gekoppelt ist, dass das mindestens eine innere Halteelement von seiner Montagestellung in seine haltende Stellung bewegt wird, wenn das antreibende Element von seiner Montagestellung in seine haltende Stellung bewegt wird.

9. Radgewicht-Handhabungsgerät (100) nach Anspruch 8, wobei die Halteanordnung (13, 15, 16, 17, 18, 19, 20, 22, 25) mindestens ein erstes und zweites inneres Halteelement (13, 15) aufweist, die jeweils verschwenkbar zwischen der zugeordneten Montagestellung und haltenden Stellung bewegbar sind, wobei das antreibende Element (17) zwischen dem ersten und zweiten inneren Halteelement angeordnet ist.

10. Radgewicht-Handhabungsgerät (100) nach Anspruch 9, wobei das antreibende Element (17) ein angeschrägter Körper ist und das antreibende Element derart angeordnet ist, dass in seiner Montagestellung ein verhältnismäßig schmaler Teil des antreibenden Elements zwischen dem ersten inneren Halteelement (13) und dem zweiten inneren Halteelement (15) angeordnet ist, und dass in seiner haltender Stellung ein verhältnismäßig breiter Teil des antreibenden Elements zwischen dem ersten inneren Halteelement und dem zweiten inneren Halteelement angeordnet ist.

11. Radgewicht-Handhabungsgerät (100) nach einem der Ansprüche 8 bis 10, wobei das antreibende Element (17) derart angeordnet ist, dass in seiner haltender Stellung mindestens ein Abschnitt des antreibenden Elements geeignet für eine Wechselwirkung mit oder ein Eingreifen in eine innere Seitenfläche (202) des Radgewichts, welches in der haltenden Stellung auf der mindestens einen eine Last abstützenden Walze (1, 3) abgestützt ist, konfiguriert ist.

12. Radgewicht-Handhabungsgerät (100) nach Anspruch 5 oder einem der Ansprüche 6 bis 11 bei Abhängigkeit von Anspruch 5, wobei der Aktuator-Mechanismus (17, 18, 19, 20, 25) des Weiteren eine verdrehbare Welle (19) aufweist, die sich zwischen dem inneren Rahmenelement (5) und dem äußeren Rahmenelement (7) erstreckt, ein Hebel (18) an einem äußeren Ende der Welle angeordnet ist und mit der Welle gekoppelt ist zur Verdrehung der Welle um deren Längsachse und die Welle betrieblich derart mit dem mindestens einen inneren Halteelement (13, 15) gekoppelt ist, dass im Gebrauch eine Verdrehung des Hebels verursacht, dass sich das mindestens eine innere Halteelement zwischen seiner Montagestellung und seiner haltenden Stellung bewegt.

13. Radgewicht-Handhabungsgerät (100) nach Anspruch 12 bei Abhängigkeit von einem der Ansprüche 8 bis 11 über Anspruch 5, wobei die Welle (19) betrieblich derart mit dem antreibenden Element (17) gekoppelt ist, dass im Betrieb eine Verdrehung des Hebels (18) verursacht, dass sich das antreibende Element zwischen seiner Montagestellung und seiner haltenden Stellung bewegt, und wobei optional der Aktuator-Mechanismus des Weiteren ein Nockenelement (20) aufweist, welches an einem inneren Ende der Welle mit der Welle (19) gekoppelt ist, wobei der Nocken geeignet angeordnet ist für eine betriebliche Wechselwirkung mit dem oder einem Eingreifen in das antreibende(n) Element (17) derart, dass in einer ersten Stellung das Nockenelement das antreibende Element in der haltenden Stellung hält und in einer zweiten Stellung das Nockenelement ermöglicht, dass sich das antreibende Element in die Montagestellung bewegt, wobei die Anordnung derart konfiguriert ist, dass im Gebrauch eine Verdrehung des Hebels (18) das Nockenelement zwischen der ersten und zweiten Stellung bewegt.

14. Radgewicht-Handhabungsgerät (100) nach Anspruch 12 oder Anspruch 13, wobei der Aktuator-Mechanismus (17, 18, 19, 20, 25) eine Verriegelungsanordnung (23) zum Verriegeln des Aktuator-Mechanismus in einer Konfiguration, in der das mindestens eine innere Halteelement (13, 15) in seiner haltenden Stellung gehalten wird, aufweist.

15. Verfahren zum Gebrauch des Radgewicht-Handhabungsgeräts (100) nach Anspruch 7 oder einem der Ansprüche 8 bis 14 bei Abhängigkeit von Anspruch 7, wobei das Verfahren aufweist:
Einsetzen des Radgewicht-Handhabungsgeräts in einen Durchgang (103) eines Radgewichts (200), wobei das mindestens eine innere Halteelement (13, 15) in der Montagestellung ist und das mindestens eine äußere Halteelement (16) entfernt ist;
Bewegen des mindestens einen inneren Halteelements (13, 15) in seine haltende Stellung und Befestigen des mindestens einen äußeren Halteelements (16) an dem Rahmen (1, 3, 4, 5, 7) des Radgewicht-Handhabungsgeräts.

## Revendications

1. Dispositif de manipulation de masse **d'équilibrage** (100) pour utilisation dans le montage d'une masse d'équilibrage (200) sur une roue d'un véhicule agricole, la masse d'équilibrage comprenant un passage (203) **s'étendant** axialement à travers celle-ci d'un côté extérieur (201) de la masse d'équilibrage à un côté intérieur (202) de la masse d'équilibrage ; le dispositif de manipulation de masse d'équilibrage comprenant :
un cadre (1, **3, 4,** 5, 7) dont au moins une partie peut être reçue dans le passage de la masse d'équilibrage, le cadre comprenant en outre au moins un rouleau porteur (1, 3) destiné à venir en prise avec une surface intérieure du passage, l'au moins un rouleau porteur étant rotatif autour d'un axe de rotation ; et
un agencement de retenue (13, 15, 16, 17, 18, 19, 20, 22, 25) pour limiter le mouvement de la masse d'équilibrage par rapport au dispositif de manipulation de masse d'équilibrage lors de l'utilisation, l'agencement de retenue comprenant au moins un organe de retenue intérieur (13, 15) monté sur le cadre pour un mouvement entre une position de montage rétractée et une position de retenue étendue
destiné à venir en prise avec une surface latérale intérieure de la masse **d'équilibrage** lorsqu'elle est supportée sur l'au moins un rouleau porteur ;
l'agencement de retenue présentant un mécanisme d'actionnement (17, 18, 19, 20, 25) pour déplacer l'au moins un organe de retenue intérieur entre les positions de montage et de retenue.

2. Dispositif de manipulation de masse d'équilibrage (100) selon la revendication 1, dans lequel le déplacement de l'au moins un organe de retenue intérieur (13, 15) de sa position de montage à sa position de retenue augmente la quantité dont l'au moins un organe de retenue intérieur fait saillie vers l'extérieur à partir de l'au moins un rouleau porteur (1, 3).

3. Dispositif de manipulation de masse d'équilibrage (100) selon la revendication 1 ou la revendication 2, dans lequel le cadre comprend un premier rouleau porteur (1) et un second rouleau porteur (3), dans lequel le premier rouleau porteur est agencé parallèlement au second rouleau porteur.

4. Dispositif de manipulation de masse d'équilibrage (100) selon l'une quelconque des revendications 1 à 3, dans lequel l'agencement de retenue (13, 15, 16, 17, 18, 19, 20, 22, 25) comprend en outre un organe de sollicitation (25) agencé pour amener l'au moins un organe de retenue intérieur en position de montage.

5. Dispositif de manipulation de masse d'équilibrage (100) selon l'une quelconque des revendications 1 à 4, dans lequel le cadre comprend un organe de cadre intérieur (5) et un organe de cadre extérieur (7), l'au moins un rouleau porteur (1, 3) étant monté entre les organes de cadre intérieur et extérieur, au moins l'organe de cadre intérieur (5) et l'au moins un rouleau porteur (1, 3) pouvant être reçus dans le passage (203) de la masse d'équilibrage, l'au moins un organe de retenue intérieur (13, 15) étant monté de manière mobile sur l'organe de cadre intérieur (5) et dans lequel, éventuellement, le cadre comprend en outre une pluralité d'organes de support (4) s'étendant entre les organes de cadre intérieur et extérieur le long d'axes longitudinaux respectifs.

6. Dispositif de manipulation de masse d'équilibrage (100) selon l'une quelconque des revendications 1 à 5, dans lequel l'agencement de retenue (13, 15, 16, 17, 18, 19, 20, 22, 25) comprend en outre au moins un organe de retenue extérieur (16) destiné à venir en prise avec une surface latérale extérieure (201) de la masse d'équilibrage, l'au moins un organe de retenue extérieur étant monté ou montable sur le cadre de manière à être espacé de l'au moins un organe de retenue intérieur (13, 15) dans une direction le long de l'axe de rotation et dans lequel, éventuellement, l'au moins un organe de retenue extérieur (16) est monté ou montable de manière réglable sur le cadre (1, 3, 4, 5, 7) pour permettre d'ajuster l'espacement axial entre l'au moins un organe de retenue extérieur (16) et l'au moins un organe de retenue intérieur (13, 15).

7. Dispositif de manipulation de masse d'équilibrage (100) selon la revendication 6, dans lequel l'au moins un organe de retenue extérieur (16) est monté ou montable de manière amovible sur le cadre (1, 3, 4, 5, 7).

8. Dispositif de manipulation de masse d'équilibrage (100) selon l'une quelconque des revendications 1 à 7, dans lequel le mécanisme d'actionnement (17, 18, 19, 20, 25) comprend :
un organe d'entraînement (17) présentant une position de montage et une position de retenue, dans lequel l'organe d'entraînement est mobile entre sa position de montage et sa position de retenue, l'organe d'entraînement étant couplé fonctionnellement à l'au moins un organe de retenue intérieur (13, 15) de sorte que l'au moins un organe de retenue intérieur soit déplacé de sa position de montage à sa position de retenue lorsque l'organe d'entraînement est déplacé de sa position de montage à sa position de retenue.

9. Dispositif de manipulation de masse d'équilibrage (100) selon la revendication 8, dans lequel l'agencement de retenue (13, 15, 16, 17, 18, 19, 20, 22, 25) comprend des premier et second organes de retenue intérieurs (13, 15), chacun étant mobile de manière pivotante entre des positions de montage et de retenue respectives, l'organe d'entraînement (17) étant situé entre les premier et second organes de retenue intérieurs.

10. Dispositif de manipulation de masse d'équilibrage (100) selon la revendication 9, dans lequel l'organe d'entraînement (17) est un corps conique et dans lequel l'organe d'entraînement est agencé de sorte que, dans sa position de montage, une partie relativement étroite de l'organe d'entraînement soit agencée entre le premier organe de retenue intérieur (13) et le second organe de retenue intérieur (15) et, dans sa position de retenue, une partie relativement large de l'organe d'entraînement soit agencée entre le premier organe de retenue intérieur et le second organe de retenue intérieur.

11. Dispositif de manipulation de masse d'équilibrage (100) selon l'une quelconque des revendications 8 à 10, dans lequel l'organe d'entraînement (17) est agencé de sorte que, dans sa position de retenue, au moins une partie de l'organe d'entraînement soit configurée pour venir en prise avec une surface latérale intérieure (202) d'une masse d'équilibrage supportée sur l'au moins un rouleau porteur (1, 3) lorsqu'il est dans la position de retenue.

12. Dispositif de manipulation de masse d'équilibrage (100) selon la revendication 5, ou l'une quelconque des revendications 6 à 11 lorsqu'elle dépend de la revendication 5, dans lequel le mécanisme d'actionnement (17, 18, 19, 20, 25) comprend en outre un arbre rotatif (19) s'étendant entre l'organe de cadre intérieur (5) et l'organe de cadre extérieur (7), un levier (18) agencé sur une extrémité extérieure de l'arbre et couplé à l'arbre pour faire tourner l'arbre autour de son axe longitudinal, l'arbre étant couplé fonctionnellement à l'au moins un organe de retenue intérieur (13, 15) de sorte que, lors de l'utilisation, la rotation du levier amène l'au moins un organe de retenue intérieur à se déplacer entre ses positions de montage et de retenue.

13. Dispositif de manipulation de masse d'équilibrage (100) selon la revendication 12 lorsqu'elle dépend de l'une quelconque des revendications 8 à 11 par le biais de la revendication 5, dans lequel l'arbre (19) est couplé fonctionnellement à l'organe d'entraînement (17) de sorte que, lors de l'utilisation, la rotation du levier (18) amène l'organe d'entraînement à se déplacer entre sa position de montage et sa position de retenue et dans lequel, éventuellement, le mécanisme d'actionnement comprend en outre un organe à came (20) couplé à l'arbre (19) sur une extrémité intérieure de l'arbre, la came étant agencée pour venir fonctionnellement en prise avec l'organe d'entraînement (17) de sorte que, dans une première position, l'organe à came maintienne l'organe d'entraînement dans la position de retenue et, dans une seconde position, l'organe à came permette à l'organe d'entraînement de se déplacer vers la position de montage, l'agencement étant configuré de sorte que, lors de l'utilisation, la rotation du levier (18) déplace l'organe à came entre les première et seconde positions.

14. Dispositif de manipulation de masse d'équilibrage (100) selon la revendication 12 ou la revendication 13, dans lequel le mécanisme d'actionnement (17, 18, 19, 20, 25) inclut un agencement de verrouillage (23) pour verrouiller le mécanisme d'actionnement dans une configuration dans laquelle l'au moins un organe de retenue intérieur (13, 15) est maintenu dans sa position de retenue.

15. Procédé d'utilisation du dispositif de manipulation de masse d'équilibrage (100) selon la revendication 7, ou l'une quelconque des revendications 8 à 14 lorsqu'elle dépend de la revendication 7, le procédé comprenant :
l'insertion du dispositif de manipulation de masse d'équilibrage dans un passage (103) d'une masse d'équilibrage (200), l'au moins un organe de retenue intérieur (13, 15) étant en position de montage et l'au moins un organe de retenue extérieur (16) étant retiré ;
le déplacement de l'au moins un organe de retenue intérieur (13, 15) vers sa position de retenue et la fixation de l'au moins un organe de retenue extérieur (16) au cadre (1, 3, 4, 5, 7) du dispositif de manipulation de masse d'équilibrage.
